# DEMANDE DE BREVET EUROPEEN

(11) **EP 1 251 262 A1**
(43) Date de publication de la demande: **23.10.2002**
(21) Numéro de dépôt: 02290828.9
(22) Date de dépôt: 04.04.2002
(51) Int. Cl.: F02K 1/76

(54) **Système de verrouillage de secours pour porte d'inverseur de poussée**

(30) Priorité: 05.04.2001 FR 0104624
(71) Demandeur: Hurel-Hispano Le Havre, 76700 Gonfreville l'Orcher (FR)
(72) Inventeur: Gonidec, Patrick, 31200 Toulouse (FR); Rouyer, Pascal Gérard, 76430 Saint-Aubin Routot (FR)
(74) Mandataire: Berrou, Paul

(57) **Abrégé**

Le système de verrouillage de secours de la porte (2) d'un inverseur de poussée comporte une pêne (13) ayant un crochet (12) à profil auto bloquant susceptible d'accrocher une interface de verrouillage (10) de la porte (2) en cas de défaillance des systèmes de verrouillage normaux. Le pêne (13) est sollicité contre l'interface (10) par un ressort (20) disposé dans un vérin dont la tige (34) appuie contre une face frontale d'un talon (22) du pêne terminé par une surface cylindrique (45) de révolution autour de l'axe d'articulation (14) du pêne (13). Lorsqu'on rétracte la tige (34), un levier double (40) déplace positivement le pêne (13) vers une position d'ouverture minimum dans laquelle la porte (2) peut s'ouvrir. Un ressort de déverrouillage (36) provoque l'ouverture totale du pêne lorsqu'un levier d'ouverture (50) est libéré. La tige (34) est en appui sur la surface cylindrique (45) du talon (22) lorsque le pêne (13) est ouvert. Le ressort (20) est alors inopérant. Le levier d'ouverture (50) est relié au pêne (13) par des biellettes (51a, 51b), et limite l'angle d'ouverture du pêne (13).

## Description

L'invention concerne un système de verrouillage de secours d'une porte d'inversion de poussée destiné à retenir ladite porte en cas de défaillance de ses moyens de verrouillage principaux, ledit système comportant un pêne monté pivotant autour d'un premier axe d'articulation sur une structure fixe de l'inverseur et présentant à son extrémité libre un crochet disposé dans un plan perpendiculaire audit premier axe d'articulation et susceptible de coopérer, en position de fermeture de la porte, avec une interface de verrouillage solidaire de la porte, des moyens élastiques pour maintenir le pêne contre l'interface dans la position de fermeture de la porte, des moyens d'actionnement du pêne à l'ouverture et des moyens de fermeture automatique du pêne actionnés par la porte au cours de son mouvement de fermeture.

Les turbomoteurs équipant les aéronefs comportent des inverseurs de poussée qui permettent d'inverser la direction du flux de gaz de propulsion généré par les turbomoteurs afin de ralentir l'aéronef.

Ces inverseurs de poussée comportent une structure annulaire fixe entourant le turbomoteur et traversée par une pluralité d'ouvertures radiales, et des obturateurs mobiles susceptibles de fermer les ouvertures radiales. Lorsque les ouvertures radiales sont fermées, le flux de gaz de propulsion généré par le turbomoteur est canalisé vers l'arrière afin de propulser l'aéronef. Lorsque les ouvertures radiales sont ouvertes, les obturateurs mobiles, également appelés portes, sont basculés vers l'arrière et obturent au moins partiellement le canal de circulation du flux gazeux, et le flux de gaz ressort par les ouvertures et est dirigé vers l'avant du turbomoteur afin de ralentir l'aéronef. Une grande sécurité est requise dans le maintien des portes en position fermée.

Les portes sont actionnées par des vérins et sont maintenues fermées par un système de verrouillage principal et il est prévu un système de verrouillage de secours chargé de maintenir la porte fermée en cas de défaillance du système de verrouillage principal.

C'est ce système de verrouillage de secours qui fait l'objet de l'invention.

FR A 2 765 916 représente l'état de la technique le plus proche de l'invention. Ce document montre dans les figures 17 et 18 un système de verrouillage de secours qui comporte un pêne terminé par un crochet et sollicité en permanence à la fermeture par des moyens élastiques, des moyens d'actionnement du pêne à l'ouverture, constitués par un vérin qui déplace le pêne vers une position d'ouverture maximum, et une gâchette chargée par un ressort et destinée à maintenir le pêne en position ouverte. Au cours du mouvement de fermeture de la porte, cette dernière manoeuvre la gâchette ce qui a pour effet de libérer le pêne qui est ramené à la position de fermeture par les moyens élastiques. La gâchette comporte une butée escamotable, contre laquelle une contrebutée du pêne est susceptible de venir en appui, afin de maintenir le pêne en position ouverte. Lorsque la porte s'ouvre, la gâchette est sollicitée par son ressort, afin que la butée escamotable vienne se placer sous la contrebutée après l'ouverture du pêne. Lorsque le vérin est mis à l'échappement, le pêne revient en arrière sous l'action des forces élastiques et la gâchette est armée. En cas d'usure de la butée et de la contrebutée, le pêne peut se refermer prématurément sous l'action des moyens élastiques et empêcher une fermeture ultérieure de la porte.

L'invention s'est donné pour but de proposer un système de verrouillage tel que mentionné en introduction, dans lequel le pêne ne peut se refermer que sous l'action des moyens de fermeture automatiques actionnés par la porte au cours de son mouvement de fermeture.

Le système de verrouillage selon l'invention et caractérisé par le fait que :

le pêne présente à l'extrémité opposée au crochet un talon terminé par une surface cylindrique de révolution autour dudit premier axe d'articulation,

les moyens élastiques agissent sur un piston monté coulissant dans un cylindre solidaire de la structure fixe, ledit piston étant solidaire d'une tige de piston disposée en regard du talon, ledit cylindre étant disposé de telle manière que dans la position de fermeture du pêne, l'extrémité de la tige de piston est en appui sur une face latérale du talon sous l'action desdits moyens élastiques, et

les moyens d'actionnement du pêne à l'ouverture comportent ledit cylindre dans lequel le piston est susceptible d'être soumis à un agent de pression agissant à l'encontre des forces élastiques, afin d'éloigner l'extrémité de la tige de piston dudit talon, et

des moyens pour faire pivoter le pêne d'au moins un angle minimum d'ouverture, lorsque la tige de piston se rétracte dans le cylindre, afin de permettre l'ouverture de la porte, la tige de piston étant en regard de la surface cylindrique du talon, lorsque le pêne atteint l'angle minimum d'ouverture.

Ainsi l'action des moyens élastiques est annihilée pendant l'actionnement du piston par l'agent de pression, ce qui a pour effet d'ouvrir le pêne vers un angle minimum d'ouverture, position dans laquelle la tige de piston est en regard de la paroi cylindrique du talon. En l'absence d'agent de pression dans le cylindre, la tête de la tige de piston sera en appui sur la paroi cylindrique du talon, mais ne pourra pas provoquer une fermeture intempestive du pêne.

Avantageusement, les moyens pour faire pivoter le pêne d'un angle minimum d'ouverture comportent un levier double d'ouverture monté pivotant autour d'un deuxième axe d'articulation solidaire, de la structure fixe et parallèle au premier axe d'articulation, ce levier double étant articulé à une première extrémité sur la tige de piston et ayant une extrémité libre susceptible de repousser le pêne vers l'ouverture par suite de la rétraction de la tige de piston.

Ainsi, le pêne est ouvert positivement par le vérin.

Ces moyens peuvent comporter en outre un ressort de déverrouillage interposé entre le pêne et la structure fixe. Dans ce cas, les moyens élastiques prévus dans le vérin exercent sur le pêne un couple antagoniste à celui du ressort et supérieur au couple exercé par le ressort de déverrouillage.

Ainsi, les moyens de pivotement du pêne vers un angle minimum d'ouverture sont redondants par mesure de sécurité.

De préférence, les moyens de fermeture automatique du pêne comportent un levier de fermeture monté pivotant à l'une de ses extrémités sur un troisième axe d'articulation solidaire de la structure fixe et parallèle au premier axe d'articulation, ce levier de fermeture étant relié au pêne par une biellette, l'extrémité libre dudit levier de fermeture se trouvant dans le chemin de déplacement d'une ferrure solidaire de la porte et destinée à actionner ledit levier au cours de la phase finale de fermeture de la porte afin de ramener le pêne vers la position de fermeture.

S'il est prévu un ressort de déverrouillage, ce ressort ouvre le pêne vers une position de déverrouillage maximum lorsque la ferrure s'écarte de l'extrémité libre du levier de fermeture, au cours de l'ouverture de 1a porte.

La position d'ouverture maximum est définie par une butée mécanique prévue sur le levier de fermeture. Dans cette position d'ouverture maximum, la tête de la tige de piston est en appui sur la surface cylindre du talon, lorsque le vérin est mis à l'échappement. Les moyens élastiques sont alors inopérants. Lors de la fermeture de la porte, la ferrure actionne le levier de fermeture, qui ramène le pêne vers la position de fermeture. La tête de la tige de piston coulisse sur la paroi cylindrique et lorsqu'elle atteint la face frontale du talon, les moyens élastiques agissent pour appliquer le pêne contre l'interface de verrouillage.

D'autres avantages et caractéristiques de l'invention ressortiront à la lecture de la description suivante faite à titre d'exemple et en référence aux dessins annexés dans lesquels :
la figure 1 est une coupe selon un plan passant par l'axe du turbomoteur, d'un dispositif de verrouillage de secours selon l'invention, dans la position fermée de la porte de l'inverseur de poussée ;
la figure 2 est une coupe identique à celle de la figure 1, qui montre un dispositif de verrouillage de secours dans la position d'ouverture minimum au cours de la phase d'ouverture de la porte de l'inverseur de poussée ;
la figure 3 montre en coupe la disposition du même dispositif de verrouillage de secours dans la position d'ouverture maximum ;
la figure 4 montre à plus grande échelle la disposition de la tige du piston contre le talon du pêne dans la position d'ouverture maximum du pêne ;
la figure 5 montre en coupe la disposition du dispositif de verrouillage de secours, lors de la phase finale de fermeture de la porte de l'inverseur de poussée ;
la figure 6 montre, en coupe, la disposition du dispositif de verrouillage de secours en cas de défaillance des dispositifs normaux de verrouillage de la porte de l'inverseur de poussée ; et
la figure 7 est une vue en perspective du dispositif de verrouillage de secours selon l'invention en position ouverte.

Les dessins montrent un dispositif 1 de verrouillage de secours, que nous appellerons verrou, susceptible de retenir une porte basculante 2 d'un inverseur de poussée, en cas de défaillance des dispositifs de verrouillage normaux de cette porte 2.

En position fermée, la porte 2 obture une ouverture 3 ménagée dans une nacelle 4 entourant un turbomoteur d'axe X.

La nacelle comporte, de manière connue, une paroi interne 5 délimitant un passage 8 par lequel s'écoule un flux gazeux de propulsion et une paroi externe 6 de forme aérodynamique, ces parois 5 et 6 étant reliées au niveau de l'ouverture 3 par des raidisseurs 7.

La porte comporte également une paroi interne Sa et une paroi externe 6a reliées à l'avant par des raidisseurs 7a. Dans la position de fermeture de la porte 2, les parois Sa et 6a sont respectivement dans le prolongement des parois 5 et 6 de la nacelle 4, afin d'éviter des turbulences dans le passage 8 et dans le flux d'air externe à la nacelle 4.

La porte 2 peut basculer autour d'un axe situé en aval dans le passage 8, afin d'obturer le passage 8 au moins partiellement et de dévier le flux gazeux de propulsion vers l'ouverture 3 et vers l'avant de la nacelle 4, afin de freiner l'aéronef équipé dudit turbomoteur, au moins durant la phase de roulage sur la piste après l'atterrissage.

L'inverseur de poussée comporte en général plusieurs portes disposées circonférentiellement sur la nacelle 4 et actionnées à l'unisson par des moyens de commande. Des moyens de verrouillage normaux, non montrés sur les dessins, sont prévus pour verrouiller les portes 2 en position fermée.

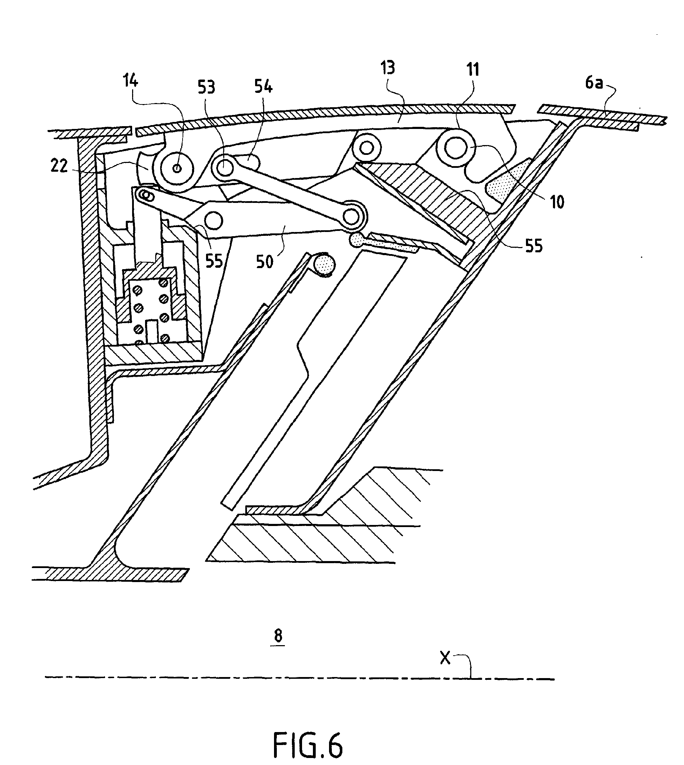

Le verrou de secours 1, objet de la présente invention, sert à retenir la porte 2 en position quasiment fermée en cas de défaillance des moyens de verrouillage normaux. La figure 6 montre la disposition du verrou de secours 1 lorsque la porte 2 est intempestivement déverrouillée. Ainsi que cela est visible sur cette figure 6, la porte 2 comporte une interface de verrouillage 10, constituée par une tige solidaire des raidisseurs 7a, qui vient loger dans un logement 11 d'un crochet 12 à profil auto fermant, prévu à l'extrémité libre d'un pêne 13 monté rotatif autour d'un axe d'articulation 14 monté sur des chapes 15a, 15b (voir figure 7) d'une platine 16 fixée sur les raidisseurs 7. L'axe d'articulation 14 est perpendiculaire à l'axe X du turbomoteur et disposé au voisinage de la paroi externe 6 de la nacelle 4. Le crochet 12 est dirigé du côté interne de la nacelle 4, et de telle manière que le pêne 13 peut pivoter vers l'extérieur de la nacelle 4. Ce pêne 13 est recouvert d'une plaque 17 qui, en position fermée du verrou 1, est située dans la continuité des parois externes 5 et Sa. Ainsi, il est possible de vérifier visuellement de l'extérieur si le pêne 13 est dans la position fermée ou dans la position ouverte.

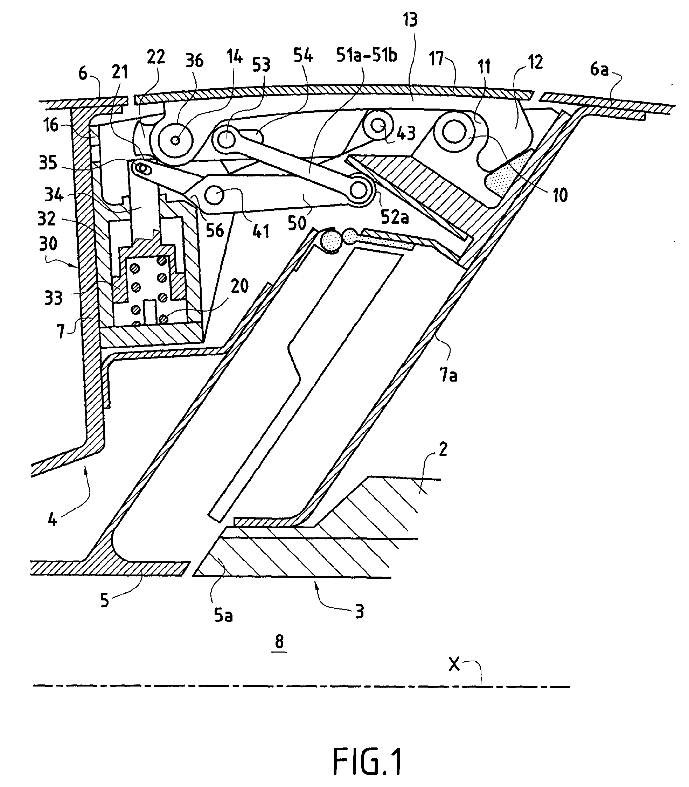

Lorsque les moyens de verrouillage normaux de la porte 2 fonctionnent correctement, ainsi que cela est montré sur la figure 1, l'interface de verrouillage 10 est disposée à l'avant du crochet 12 et la face interne du pêne 13 est en appui permanent sur l'interface de verrouillage 10, grâce au couple exercé par des moyens élastiques constitués par un ressort 20 qui appuient sur la face inférieure 21 d'un talon 22, prévue à l'extrémité du pêne 13 opposée au crochet 12 de l'autre côté de l'axe d'articulation 14.

Ainsi, en cas de défaillance des moyens de verrouillage normaux de la porte 2, le pêne 13 reste toujours en appui sur l'interface de verrouillage 10 solidaire de la porte 2, et le crochet 12 retient cette interface de verrouillage 10, afin de maintenir la porte 2 dans une position quasiment fermée, lorsque la porte s'écarte de sa position de verrouillage d'une distance prédéterminée.

Des moyens d'actionnement 30 du pêne 13 sont prévus pour écarter le crochet 12 du chemin 31 parcouru par l'interface de verrouillage 10 lors de l'ouverture de la porte 2.

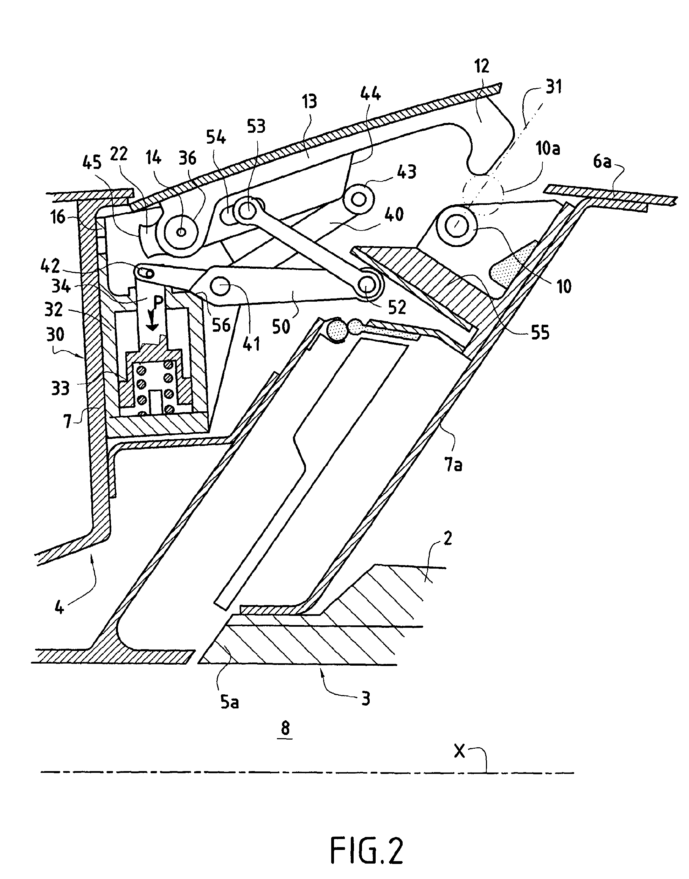

La figure 1 montre le pêne 13 dans la position de fermeture, la porte 2 étant verrouillée, et la figure 2 montre le pêne 13, après actionnement par les moyens 30, et la porte 2 étant prête à s'ouvrir.

Les moyens d'actionnement 30 comportent un vérin hydraulique dont le cylindre 32 est fixé sur la platine 16 et dont le piston 33 est chargé par un ressort constituant les moyens élastiques 20. Le piston 33 entraîne en translation une tige de piston 34 dirigée vers le talon 22. Lorsque le pêne 13 est dans la position fermée, l'extrémité de la tige de piston 34 équipée d'un galet 35 est en appui sur la face inférieure 21 du talon 22, en l'absence d'agent de pression dans la chambre supérieure du cylindre 32, sous l'action du ressort 20 disposé dans la chambre inférieure du cylindre 32. Le pêne 13 est dans ce cas verrouillé (figure 1).

Si, partant de cette position de verrouillage du pêne 13, on soumet le piston 33 à un agent de pression, un fluide hydraulique par exemple, qui agit à l'encontre des ressorts 20, la tige de piston 34 se rétracte dans le cylindre 32, et le galet 35 s'écarte du talon 22, d'une distance suffisante pour permettre le pivotement du talon 22. Dans cette position de la tige de piston 34, le pêne 13 est basculé vers l'extérieur d'un angle de rotation minimum, afin de permettre le déplacement de l'interface de verrouillage 10 le long du chemin 31 montré sur la figure 2.

Le pêne 13 est basculé par deux moyens redondants. Tout d'abord un ressort spirale 36 de déverrouillage est monté autour de l'axe d'articulation 14. Ce ressort spirale 36 prend appui, d'une part, sur le pêne 13 et, d'autre part, sur la structure fixe de la nacelle 4, et a tendance à basculer le pêne 13 vers l'extérieur de la nacelle 4.

En outre, un levier double 40 monté pivotant sur les flasques 15a et 15b autour d'un axe d'articulation 41, parallèle à l'axe 14, et dont un bras 40a est articulé avec jeu, grâce à une lumière 46 sur l'axe 42 du galet 35, et dont l'autre bras 40b est équipé à son extrémité d'un galet 43, est actionné par le déplacement de la tige de piston 34, afin d'assurer une ouverture positive du pêne 13.

En position fermée du pêne 13, le galet 43 est en appui sur la face inférieure du pêne 13. Ce dernier est équipé d'une rampe 44 sur laquelle roule le galet 43, lors de la rétraction de la tige de piston 34. La dimension de la rampe 44, du galet 43 et leurs positionnements sont définis de façon à garantir en fin de course du piston 33 une position minimum d'ouverture du pêne 13. Cette position minimum doit permettre, en cas de défaillance du ressort de déverrouillage 36, d'autoriser l'ouverture de la porte 2, en empêchant toute possibilité de retenue de l'interface de verrouillage 10 en position 13a par le crochet 12, ainsi que cela est montré sur la figure 2.

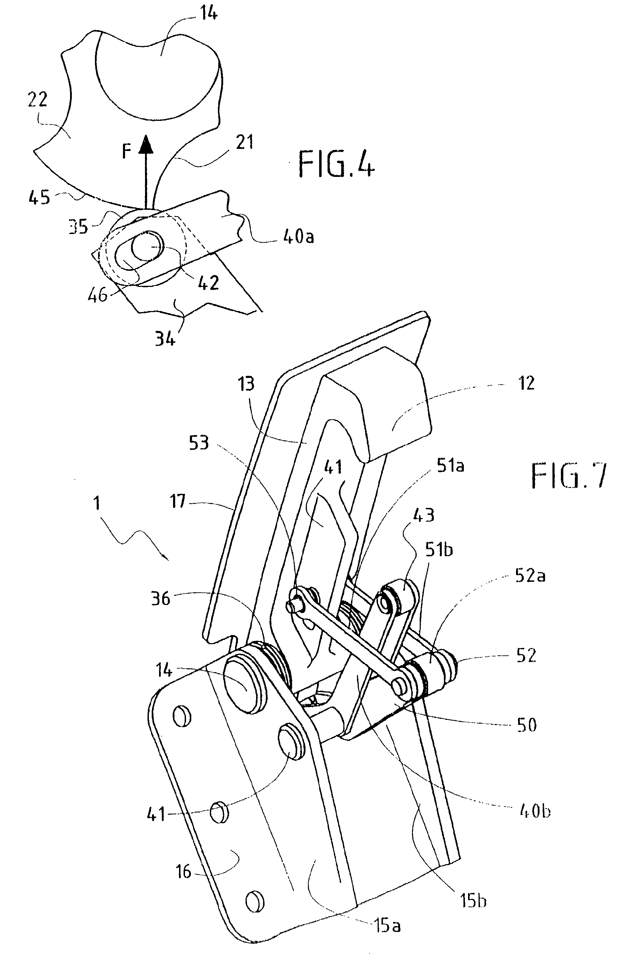

Le talon 22 du pêne 13 présente, à son extrémité libre, une surface cylindrique 45 de révolution autour de l'axe d'articulation. La disposition de cette surface cylindrique 45 et de la face inférieure 21 du talon 22, ainsi que la distance de rétraction de la tige de piston 34 et le positionnement de cette dernière sont définis de telle manière que, lorsque le pêne 13 se trouve dans sa position d'ouverture minimum définie positivement par le pivotement du double levier 40, le galet 35 vienne en appui contre la surface cylindrique 45, lorsque la chambre supérieure du cylindre 32 est mise à l'échappement. Dans cette position, le ressort 20 appuie le galet 35 contre la paroi cylindrique 45 et le galet exerce sur la paroi cylindrique 45 une force F dirigée vers l'axe d'articulation 14 du pêne 13, ainsi que cela est montré sur la figure 4. Lorsque le pêne 13 a atteint sa position d'ouverture minimum, les moyens élastiques 20 deviennent inopérants.

Si le ressort spirale 36 fonctionne correctement, ce ressort 36 aura tendance à solliciter le pêne 13 vers l'extérieur de la nacelle 4 au-delà de la position d'ouverture minimum du pêne 13.

Il est en outre prévu des moyens pour ramener automatiquement le pêne 13 vers la position de fermeture, lors de la fermeture de la porte 2.

A cet effet, le verrou 1 est équipé d'un levier de fermeture 50 articulé sur l'axe d'articulation 41 du double levier 40 et dirigé vers le raidisseur 7a. Deux bielles parallèles 51a et 51b sont articulées par l'une de leurs extrémités sur l'extrémité libre 52 du levier de fermeture 50 et comportent, à leur deuxième extrémité, un axe 53 qui coulisse dans une lumière 54 ménagée dans le pêne 13. La porte 2 est équipée d'une ferrure 55 susceptible d'appuyer sur le galet 52a, prévu à l'extrémité libre 52 du levier de fermeture 50, au cours du mouvement de fermeture de la porte 2, afin de ramener le pêne 13 vers sa position de fermeture.

Lorsque le pêne 13 est dans la position fermée, ainsi que cela est montré sur la figure 1, l'extrémité libre 52 du levier de fermeture 50 est maintenue en appui contre la face inférieure de la ferrure 55 par un ressort de torsion installé autour de l'axe d'articulation 41, et l'axe 53 des bielles 51a et 51b est disposé dans la lumière 54 au plus près de l'axe d'articulation 14 du pêne 13.

Lorsque, sous l'action de l'agent de pression, le piston 33 et la tige de piston libèrent le pêne 13, l'axe 53 coulisse dans la lumière 54 et cette dernière est dimensionnée de telle manière que le pêne 13 puisse se positionner avec certitude dans la position d'ouverture minimum, montrée sur la figure 2.

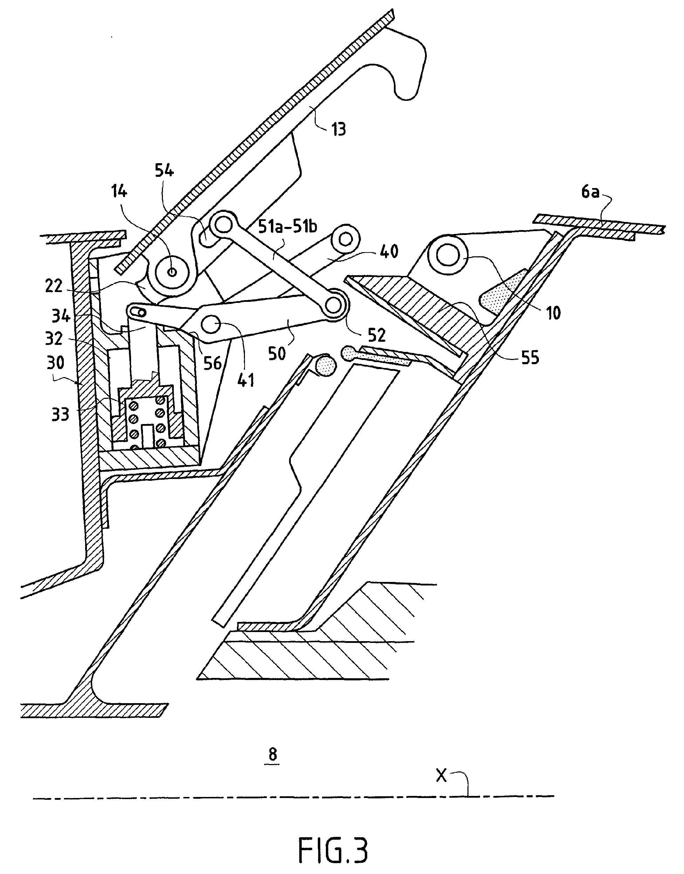

Au cours de la phase initiale d'ouverture de la porte 2, la ferrure 55 s'éloigne du raidisseur 7 de la nacelle 4, mais l'extrémité libre 52 du levier de fermeture reste en appui contre la face inférieure de la ferrure 55. Ensuite, lorsque la ferrure 55 s'écarte de l'extrémité libre 52 du levier de fermeture 50, le pêne est sollicité vers l'extérieur par le ressort de déverrouillage 36, ainsi que cela est montré sur la figure 3. Afin de s'assurer que l'extrémité libre 52 du levier de fermeture 50 reste dans le chemin de retour de la ferrure 55, afin de permettre la fermeture du pêne 13 lors du mouvement de fermeture de la porte 2, le débattement du levier de fermeture 50 est limité par une butée mécanique 56 prévue sur le levier de fermeture 50 et qui coopère avec une contrebutée prévue sur la structure fixe du verrou 1, le cylindre 32 ou une chape 15a, 15b par exemple. Dans cette position de débattement maximum du levier de fermeture 50, montrée sur la figure 3, l'axe 53 des bielles 51a et 51b est positionné à l'extrémité de la lumière 54 éloignée de l'axe d'articulation 14, ce qui limite l'ouverture maximum du pêne 13. Dans cette position d'ouverture maximum, le galet 35 situé à l'extrémité de la tige de piston 34 est en appui sur la surface cylindrique 45 du talon 22.

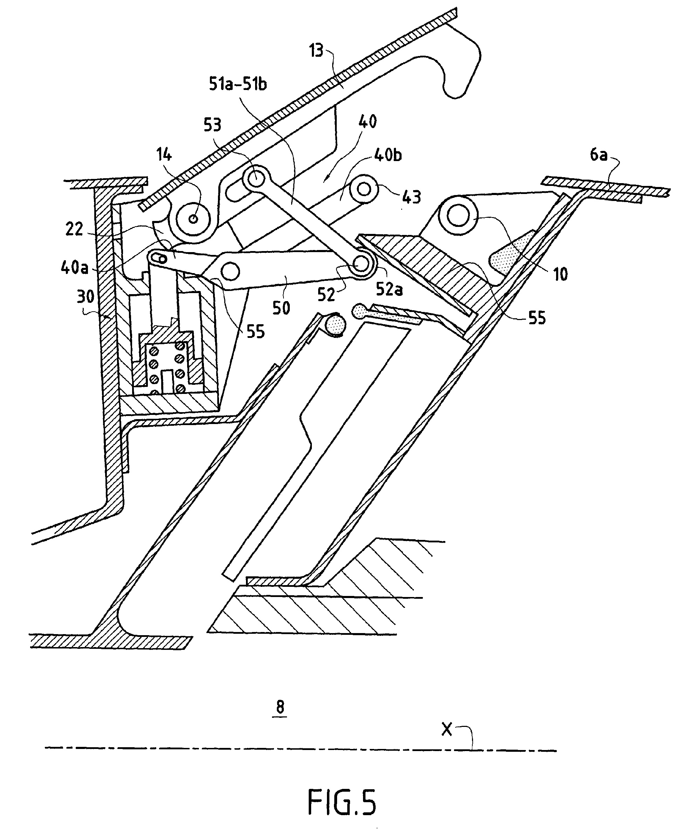

Lors du mouvement de fermeture de la porte 2, montré sur la figure 5, la ferrure 55 va venir en appui sur l'extrémité libre 52 du levier de fermeture 50, puis le levier de fermeture 50 va pivoter dans le sens des aiguilles d'une montre, les bielles 51a et 51b ramènent le pêne 13 vers la position de fermeture. Durant le début de la phase de fermeture, le galet 35 roule sur la surface cylindrique 45 du talon 22, et le ressort 20 est inopérant. Lorsque le pêne 13 a dépassé la position d'ouverture minimum, montrée sur la figure 2, l'interface de verrouillage 10 se trouve en regard de l'extrémité du crochet 12. Le galet 35 quitte alors la surface cylindrique 45 et vient en appui sur la face inférieure 21 du talon 22. Dans cette position, le ressort 20 devient opérant et le pêne 13 appuie positivement sur l'interface de verrouillage 10.

Le ressort 20 est choisi de telle manière que le couple qu'il exerce sur le pêne 13 soit supérieur à la somme des moments d'aide à l'ouverture générés à la fois par le ressort de déverrouillage 36 et le ressort sollicitant le levier de fermeture 50.

## Revendications

1. Système de verrouillage de secours d'une porte (2) d'inversion de poussée destiné à retenir ladite porte (2) en cas de défaillance de ses moyens de verrouillage principaux, ledit système comportant un pêne (13) monté pivotant autour d'un premier axe d'articulation (14) sur une structure fixe (7) de l'inverseur et présentant à son extrémité libre un crochet (12) disposé dans un plan perpendiculaire audit premier axe d'articulation (14) et susceptible de coopérer, en position de fermeture de la porte (2), avec une interface de verrouillage (10) solidaire de la porte (2), des moyens élastiques (20) pour maintenir le pêne (13) contre l'interface (10) dans la position de fermeture de la porte (2), des moyens d'actionnement du pêne à l'ouverture et des moyens de fermeture automatique du pêne (13) actionnés par la porte (2) au cours de son mouvement de fermeture, **caractérisé par le fait que**
le pêne (13) présente à l'extrémité opposée au crochet (12) un talon (22) terminé par une surface cylindrique (45) de révolution autour dudit premier axe d'articulation (14),
les moyens élastiques (20) agissent sur un piston (33) monté coulissant dans un cylindre (32) solidaire de la structure fixe (7), ledit piston (33) étant solidaire d'une tige de piston (34) disposée en regard du talon (22), ledit cylindre (32) étant disposé de telle manière que dans la position de fermeture du pêne (13), l'extrémité de la tige de piston (34) est en appui sur une face latérale (21) du talon (22) sous l'action desdits moyens élastiques (20), et
les moyens d'actionnement du pêne à l'ouverture comportent ledit cylindre (32) dans lequel le piston (33) est susceptible d'être soumis à un agent de pression agissant à l'encontre des forces élastiques (20), afin d'éloigner l'extrémité de la tige de piston (34) dudit talon (22), et
des moyens pour faire pivoter le pêne d'au moins un angle minimum d'ouverture, lorsque la tige de piston (34) se rétracte dans le cylindre (32), afin de permettre l'ouverture de la porte (2), la tige de piston (34) étant en regard de la surface cylindrique (45) du talon (22), lorsque le pêne atteint l'angle minimum d'ouverture.

2. Système selon la revendication 1, **caractérisé par le fait que** les moyens pour faire pivoter le pêne (13) d'un angle minimum d'ouverture comportent un ressort de déverrouillage (36) interposé entre le pêne (13) et la structure fixe (7).

3. Système selon la revendication 1, **caractérisé par le fait que** les moyens pour faire pivoter le pêne (13) d'un angle minimum d'ouverture comportent un levier double d'ouverture (40) monté pivotant autour d'un deuxième axe d'articulation (41) solidaire de la structure fixe et parallèle au premier axe d'articulation (14), ce levier double étant articulé à une première extrémité sur la tige de piston (34) et ayant une extrémité libre (43) susceptible de repousser le pêne (13) vers l'ouverture par suite de la rétraction de la tige de piston (34).

4. Système selon la revendication 3, **caractérisé par le fait que** l'articulation du levier double (40) sur la tige de piston (34) est réalisée avec un jeu.

5. Système selon l'une quelconque des revendications 3 ou 4, **caractérisé par le fait que** les moyens pour faire pivoter le pêne (13) d'une angle minimum d'ouverture comportent en outre un ressort de déverrouillage (36) interposé entre le pêne (13) et la structure fixe (7).

6. Système selon l'une quelconque des revendications 1 à 5, **caractérisé par le fait que** les moyens de fermeture automatique du pêne (13) comportent un levier de fermeture (50) monté pivotant à l'une de ses extrémités sur un deuxième axe d'articulation (41) solidaire de la structure fixe (7) et parallèle au premier axe d'articulation (14), ce levier de fermeture (50) étant relié au pêne (13) par une biellette (51a, 51b), l'extrémité libre (52) dudit levier de fermeture (50) se trouvant dans le chemin de déplacement d'une ferrure (55) solidaire de la porte (2) et destinée à actionner ledit levier (50) au cours de la phase finale de fermeture de la porte (2) afin de ramener le pêne (13) vers la position de fermeture.

7. Système selon 1a revendication 6, **caractérisé par le fait que** lorsque la ferrure (55) s'écarte de l'extrémité libre (52) du levier de fermeture (50), le pêne (13) est sollicité vers une ouverture maximum par un ressort de déverrouillage (36) interposé entre le pêne (13) et la structure fixe (7).

8. Système selon la revendication 7, **caractérisé par le fait que** la position maximale d'ouverture du pêne (13) est définie par une butée mécanique (56).

9. Système selon la revendication 8, **caractérisé par le fait que** la butée mécanique (55) est prévue sur le levier de fermeture (50).

10. Système selon l'une quelconque des revendications 6 à 9, **caractérisé par le fait que** l'extrémité de la tige de piston (34) est en appui sur la surface cylindrique (45) du talon (22) lorsque la ferrure (55) de porte est écartée de l'extrémité libre (52) du levier de fermeture (50).
